(19) Europäisches Patentamt
European Patent Office
Office européen des brevets

(11) **EP 2 160 566 B1**

(12) **EUROPÄISCHE PATENTSCHRIFT**

(45) Veröffentlichungstag und Bekanntmachung des Hinweises auf die Patenterteilung:
**14.12.2011 Patentblatt 2011/50**

(21) Anmeldenummer: **08716716.9**

(22) Anmeldetag: **28.03.2008**

(51) Int Cl.:
**G01C 19/56** (2006.01)

(86) Internationale Anmeldenummer:
**PCT/EP2008/002504**

(87) Internationale Veröffentlichungsnummer:
**WO 2009/003543 (08.01.2009 Gazette 2009/02)**

(54) **DREHRATENSENSOR**

ROTATION RATE SENSOR

CAPTEUR DE VITESSE DE ROTATION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.06.2007 DE 102007030120**

(43) Veröffentlichungstag der Anmeldung:
**10.03.2010 Patentblatt 2010/10**

(73) Patentinhaber: **Northrop Grumman LITEF GmbH 79115 Freiburg (DE)**

(72) Erfinder:
• **GEIGER, Wolfram 79112 Freiburg (DE)**
• **LEINFELDER, Peter 79238 Ehrenkirchen (DE)**
• **SPAHLINGER, Günter 70188 Stuttgart (DE)**
• **BARTHOLOMEYCZIK, Julian 79112 Freiburg (DE)**

(74) Vertreter: **Zinke, Thomas Müller Hoffmann & Partner Patentanwälte Innere Wiener Straße 17 81667 München (DE)**

(56) Entgegenhaltungen:
WO-A-95/34798     WO-A-02/066929
WO-A1-2006/113162     DE-A1- 19 530 007
US-A1- 2005 072 231

**Beschreibung**

Die Erfindung bezieht sich auf einen Drehratensensor mit einem Substrat und zwei relativ zum Substrat in einer Konstruktionsebene beweglichen Einzelstrukturen, wobei die beiden beweglichen Einzelstrukturen zu einer gekoppelten Struktur derartig gekoppelt sind, dass die gekoppelte Struktur einen ersten Schwingungsmode mit gegenphasigen Auslenkungen der beweglichen Einzelstrukturen in einer ersten Richtung in der Konstruktionsebene als Anregungsmode aufweist und die gekoppelte Struktur einen zweiten Schwingungsmode als Detektionsmode aufweist, der bei angeregtem ersten Schwingungsmode und bei einer Drehung um eine zur Konstruktionsebene senkrecht stehende sensitive Achse des Drehratensensors durch Coriolisbeschleunigungen angeregt wird und eine Detektionsresonanzfrequenz aufweist.

In WO 2005/066585 A1, WO 2005/066584 A1 und US 6,705,164 werden Drehratensensoren beschrieben (in Fig. 7 exemplarisch dargestellt), die eine Anregungseinheit 710, eine Probemasse 730 und ein Substrat aufweisen, die mit Federelementen 711, 731 so gekoppelt sind, dass näherungsweise die Anregungseinheit 710 relativ zum Substrat nur in Richtung einer ersten Achse (x-Achse) beweglich ist und die Probemasse 730 relativ zur Anregungseinheit 710 nur in Richtung einer zur ersten Achse (x) orthogonalen zweiten Achse (y-Achse) beweglich ist. Beide Achsen liegen in der Substratebene, d.h. im Rahmen von Fertigungstoleranzen bewegen sich die Strukturen nicht senkrecht zum Substrat. Es sind keine Kraftgeber und Abgriffe erforderlich, mit welchen Kräfte in z-Richtung eingeprägt beziehungsweise Bewegungen in z-Richtung gemessen werden können. Dadurch können auch solche Fertigungsverfahren für die Herstellung der Strukturen verwendet werden, mit welchen solche z-Kraftgeber und z-Abgriffe nicht realisierbar sind. Im Betrieb des als Corioliskreisel ausgebildeten Drehratensensors wird durch die Anregungseinheit 710 eine erste Schwingung in Richtung der ersten Achse (x) angeregt (Anregungsmode). Die Probemasse 730 bewegt sich dabei in dieser Richtung (näherungsweise) mit derselben Amplitude und Phase wie die Anregungseinheit 710. Es sind Kraftgeber und Abgriffe 714 für die Anregungseinheiten 710 vorgesehen, mit welchen der Anregungsmode beim meist bevorzugten Betriebsmodus mit dessen Resonanzfrequenz und mit einer auf einen festen Wert geregelten Geschwindigkeitsamplitude angeregt wird.

Wenn der Corioliskreisel um eine Achse (z) senkrecht zur Substratebene gedreht wird, wirken Coriolis-Kräfte auf die Einzelstrukturen in Richtung der zweiten Achse (y). Aufgrund der oben beschriebenen Bewegungsfreiheitsgrade kann nur die Probemasse 730 durch die Coriolis-Kräfte ausgelenkt werden. Die Probemasse 730 führt dabei eine Schwingung in Richtung der zweiten Achse (y) aus, die im Folgenden auch Detektionsmode genannt wird. Als Messgröße kann die Amplitude bzw. Auslenkung der resultierenden Schwingung der Probemasse 730 verwendet werden. Dazu sind geeignete Abgriffe 734 erforderlich, wie zum Beispiel Elektroden an der Probemasse 730 mit gegenüberliegenden am Substrat verankerten Elektroden. Alternativ kann die Coriolis-Kraft rückgestellt werden. Dafür sind Kraftgeber erforderlich, durch die Kräfte auf die Probemasse 730 eingeprägt werden können (z.B. die oben beschriebene Elektrodenanordnung, wobei die Abgrifffunktion und Kraftgeberfunktion wahlweise über gemeinsame oder über getrennte Elektroden erfolgen kann). Die Amplitude der Rückstellkraft ist dann ein Maß für die Winkelgeschwindigkeit.

In den genannten Dokumenten wird auch die Möglichkeit beschrieben, dass jeweils zwei der oben beschriebenen Kreiselelemente nebeneinander auf einem gemeinsamen Substrat angeordnet werden und die beiden Antriebseinheiten und / oder die beiden Probemassen durch weitere Federelemente gekoppelt werden.

In WO 02/16871 A1 und US 6,691,571 B2 werden Kreisel als Drehratensensoren beschrieben (in Fig. 8 exemplarisch dargestellt), die eine Anregungseinheit 810, ein Coriolis-Element 820, eine Erfassungseinheit 830 und ein Substrat aufweisen, die mit Federelementen 811, 821, 831, 832 so gekoppelt sind, dass näherungsweise die Anregungseinheit 810 relativ zum Substrat nur in Richtung einer ersten Achse (x-Achse) beweglich ist, die Erfassungseinheit 830 relativ zum Substrat nur in Richtung einer zur ersten Achse (x) orthogonalen zweiten Achse (y-Achse) beweglich ist und das Coriolis-Element 820 relativ zur Anregungseinheit 810 nur in Richtung der zweiten Achse (y) und relativ zur Erfassungseinheit 830 nur in Richtung der ersten Achse (x) beweglich ist. Beide Achsen liegen in der Substratebene, d.h. im Rahmen von Fertigungstoleranzen bewegen sich die Strukturen nicht senkrecht zum Substrat. Es sind keine Kraftgeber und Abgriffe erforderlich, mit welchen Kräfte in z-Richtung eingeprägt beziehungsweise Bewegungen in z-Richtung gemessen werden können. Dadurch können auch solche Fertigungsverfahren für die Herstellung der Strukturen verwendet werden, mit welchen solche z-Kraftgeber und z-Abgriffe nicht realisierbar sind.

Zum Betrieb des Corioliskreisels wird durch die Anregungseinheit 810 eine erste Schwingung in Richtung der ersten Achse (x) angeregt (Anregungsmode). Das Coriolis-Element 820 bewegt sich dabei in dieser Richtung (näherungsweise) mit derselben Amplitude und Phase wie die Anregungseinheit 810, während die Erfassungseinheit 830 (näherungsweise) sich nicht in dieser Richtung bewegt. Es sind Kraftgeber und Abgriffe 814 für die Anregungseinheiten 810 vorgesehen, mit welchen der Anregungsmode beim meist bevorzugten Betriebsmodus mit dessen Resonanzfrequenz und mit einer auf einen festen Wert geregelten Geschwindigkeitsamplitude angeregt wird.

Wenn der Corioliskreisel um eine Achse (z-Achse) senkrecht zur Substratebene gedreht wird, wirken Coriolis-Kräfte auf die bewegten Strukturen in Richtung der zweiten Achse (y). Aufgrund der oben beschriebenen Bewegungsfreiheitsgrade kann nur das Coriolis-Element 820 (und nicht die Anregungseinheit 810) durch die Coriolis-Kräfte ausgelenkt werden, wobei die Erfassungseinheit 830 mitgeführt wird. Das Coriolis-Element 820 zusammen mit der Erfassungseinheit 830 führt dabei eine Schwingung in Richtung der zweiten Achse (y) aus, die im Folgenden auch Detektionsmode genannt wird. Als Messgröße kann die Amplitude des resultierenden Detektionsmodes verwendet werden. Dazu sind geeignete Abgriffe 834 erforderlich wie zum Beispiel Elektroden an der Erfassungseinheit 830 mit gegenüberliegenden am Substrat verankerten Elektroden. Alternativ kann die Coriolis-Kraft rückgestellt werden. Dafür sind Kraftgeber erforderlich, durch welche Kräfte auf den Detektionsmode eingeprägt werden können (z.B. die oben beschriebene Elektrodenanordnung, wobei die Abgrifffunktion und Kraftgeberfunktion wahlweise über gemeinsame oder über getrennte Elektroden erfolgen kann). Die Amplitude der Rückstellkraft ist dann ein Maß für die Winkelgeschwindigkeit.

In WO 02/16871 A1 und US 6,691,571 B2 wird auch die Möglichkeit beschrieben, dass jeweils zwei der oben beschriebenen Kreiselelemente nebeneinander auf einem gemeinsamen Substrat angeordnet werden und die beiden Antriebseinheiten oder die beiden Coriolis-Elemente oder die beiden Erfassungseinheiten durch weitere Federelemente gekoppelt werden.

Bei allen Ausführungsformen im Stand der Technik werden jedoch die Probemassen beziehungsweise die Coriolis-Elemente und die Erfassungseinheiten durch lineare Beschleunigungskräfte in Richtung der zweiten Achse relativ stark ausgelenkt, wenn diese nicht durch Rückstellkräfte kompensiert werden. Diese "relativ starke" Auslenkung ist möglich, weil auch die beschriebenen gekoppelten Strukturen Eigenmoden besitzen (im folgenden auch "linearer Mode" genannt), bei welchen die Probemassen beziehungsweise die Coriolis-Elemente und die Erfassungseinheiten sich gleichphasig in Richtung der zweiten Achse bewegen und die Resonanzfrequenz dieses linearen Modes kleiner ist als die Resonanzfrequenz $\omega_2$ des Detektionsmodes.

Unter "relativ stark" ist zu verstehen, dass bei einer linearen statischen Beschleunigung $\alpha$ in Richtung der zweiten Achse die Auslenkung x entweder bis auf wenige Prozent

$$x = \frac{a}{\omega_2^2} \qquad\qquad (1)$$

beträgt oder größer ist ($\omega_2$ ist dabei die Resonanzfrequenz der Detektionsmode). Bei Einzelstrukturen gilt die Gleichung exakt. Bei gekoppelten Strukturen ohne Kopplung der Probemassen beziehungsweise der Coriolis-Elemente / Erfassungseinheiten können entweder zwei unabhängige Detektionsmoden vorliegen, die durch Fertigungstoleranzen etwas unterschiedliche Resonanzfrequenzen haben, und / oder es kann durch eine schwache Kopplung (beispielsweise durch nicht unendlich große Steifigkeit von massiven Strukturkomponenten) eine kleine Gleichtakt- / Gegentaktaufspaltung auftreten.

Bei einer gezielten Kopplung mit zusätzlichen Federelementen der Probemassen beziehungsweise der Coriolis-Elemente und / oder der Erfassungseinheiten erhält man eine Aufspaltung der Resonanz des Detektionsmodes der Einzelstrukturen in einen Gleichtaktmode und einen Gegentaktmode. Der Gegentaktmode entspricht dem Detektionsmode und hat bei den zutreffenden Beispielen im Stand der Technik stets eine höhere Resonanzfrequenz als der Gleichtaktmode. Dann ist die beschleunigungsabhängige Auslenkung größer als in Gleichung (1) angegeben.

Ohne die oben genannte Rückstellung der linearen Beschleunigungskräfte erhält man beschleunigungsabhängige Fehler im Ausgangssignal. Bei zwei gekoppelten Kreiseleinheiten kompensieren sich diese Fehler, allerdings nur teilweise. Eine Rückstellung reduziert die Fehlersignale, erfordert jedoch entsprechend dimensionierte Kraftgeber. Beispielsweise bei elektrostatischen Kraftgebern kann sich die erforderliche Größe der Elektroden und / oder der elektrischen Spannungen nachteilig auf die mechanischen Eigenschaften des Sensorelements beziehungsweise auf die Elektronik (Anzahl der Komponenten, Verlustleistung, Baugröße) auswirken.

Aus M.F. Zaman, A. Sharma, and F. Ayazi, "High Performance Matched-Mode Tuning Fork Gyroscope", Proc. IEEE Micro Electromechanical Systems Workshop (MEMS 2006), Istanbul, Turkey, Jan. 2006, pp. 66-69 sind mikromechanische Kreiselstrukturen bekannt, die zwei gekoppelte Probemassen besitzen und bei welchen der Anregungsmode und der Detektionsmode jeweils einer linearen gegenphasigen Schwingung dieser beiden Probemassen in der Substratebene entsprechen. In erster Näherung sind die Resonanzfrequenzen des Detektionsmodes und des linearen Modes identisch, d.h. lineare Beschleunigungen verursachen eine relativ starke Auslenkung der Probemasse, die zu Fehlersignalen führt.

Es sind mikromechanische Kreiselstrukturen bekannt (P. Greiff, B. Boxenhorn, T. King, and L. Niles, "Silicon Monolithic Micromechanical Gyroscope", Tech. Digest, 6th Int. Conf. on Solid-State Sensors and Actuators (Transducers '91), San Francisco, CA, USA, June 1991, pp. 966-968, oder J. Bernstein, S. Cho, A.T. King, A. Kourepins, P. Maciel, and M. Weinberg, A Micromachined Comb-Drive Tuning Fork Rate Gyroscope, Proc. IEEE Micro Electromechanical Systems Workshop (MEMS 93), Fort Lauderdale, FL, USA, Feb. 1993, pp. 143-148 oder DE 19641284) bei welchen der Detektionsmode einer Drehschwingung entspricht. Damit ist es möglich, die Strukturen so auszulegen, dass die Resonanzfrequenz des linearen Modes wesentlich größer ist als die Resonanzfrequenz $\omega_2$ des Detektionsmodes. Die oben beschriebenen beschleunigurigsabhängigen Fehler können somit weitgehend unterdrückt werden. Die bekannten Strukturen erfordern jedoch Kraftgeber und/oder Abgriffe, mit welchen Kräfte in z-Richtung eingeprägt beziehungsweise Bewegungen in z-Richtung gemessen werden können.

Die WO 95/34798 beschreibt Beschleunigungssensoren, deren Detektionsmode einer Drehschwingung um eine vertikale z-Achse entspricht.

Die WO2006/113162 beschreibt eine anordnung mit vier Beschleunigungssensoren, welche jeweils aus einem rahmen und einer in dem rahmen aufgehängten antriebseinheit bestehen, wobei jeweils zwei benachbaste beschleunigungssensoren zu gekoppelten gegenphasigen linearen schwingungen angesegt werden und wobei die rahmen der benachbarten Beschleunigungssensoren eine aus einer Drehschwingung eines kopplungsbalkens überführte gegenphasige linease schwingung als Detektionsmode ausführen.

Die US 2005/0072231 und die DE 19530007 beschreiben Coriolisketeisel mit mehrteiligen einzelstrukturen, wobei Teile der einzelstrukturen eine aus einer Dreschwingung über fürte gegenphasige linease schwingung als antriebsmode ausführen und wobei der Detektionsmode gegenphasige linease schwingungen von Teilen der einzelstrukturen umfaßt.

Bei allen Ausführungsformen in WO 2005/066585 A1. WO 2005/066584 A1, US 6.705.164 B2, WO 02/16871 A1 und US 6,691,571 B2 mit zwei gekoppelten Kreiselstrukturen, bei welchen nur die beiden Anregungseinheiten (und nicht die Probemassen oder Coriolis-Elemente / Erfassungseinheiten) gekoppelt sind, spalten aufgrund von Fertigungstoleranzen die Resonanzfrequenzen der beiden Probemassen bzw. der beiden Coriolis-Elemente zusammen mit den jeweiligen Erfassungseinheiten auf. Für eine hohe Genauigkeit eines mikromechanischen Kreisels muss eine hohe Schwingungsgüte der Detektionsmoden realisiert werden. Die Resonanzbreite (oder Halbwertsbreite) der Detektionsmoden kann dann kleiner sein als die Aufspaltung der beiden Resonanzfrequenzen. Für den für hohe Genauigkeiten erforderlichen so genannten doppeltresonanten Betrieb, bei dem die Resonanzfrequenz des Detektionsmodes auf die Resonanzfrequenz des Anregungsmodes abgestimmt werden muss, ist es dann erforderlich, beide Detektionsmoden einzeln abzustimmen. Bei einer elektronischen Abstimmung müssen dann beide Detektionsmoden detektiert und abgestimmt werden, wodurch der erforderliche Elektronikaufwand annähernd verdoppelt wird.

Es ist daher die Aufgabe der vorliegenden Erfindung, einen Drehratensensor anzugeben, bei dem eine Auslenkung der Probemasse beziehungsweise des Coriolis-Elements und der Erfassungseinheit bei linearen Beschleunigungen in Richtung der zweiten Achse auch ohne Rückstellung weitgehend verhindert wird. Es sollen außerdem keine Kraftgeber und Abgriffe erforderlich sein, mit welchen Kräfte in z-Richtung eingeprägt beziehungsweise Bewegungen in z-Richtung gemessen werden können. Darüber hinaus soll eine mechanische Struktur bereitgestellt werden, bei der auch bei hohen Genauigkeitsanforderungen und großer Schwingungsgüte nur ein Detektionsmode erfasst (und geregelt) werden muss.

Die Aufgabe wird erfindungsgemäß gelöst durch einen Drehratensensor mit den kennzeichnenden Merkmalen des Patentanspruchs 1.

Der Drehratensensor besteht aus einem Substrat und zwei relativ zum Substrat in einer Konstruktionsebene beweglichen Einzelstrukturen. Zwischen den beiden beweglichen Einzelstrukturen besteht eine Kopplung, so dass die folgenden Merkmale erfüllt sind:

- die gekoppelte Struktur besitzt einen ersten Schwingungsmode mit gegenphasigen Auslenkungen der beweglichen Einzelstrukturen in einer ersten Richtung in der Konstruktionsebene (Anregungsmode),
- die gekoppelte Struktur besitzt einen zweiten Schwingungsmode, der bei angeregtem erstem Schwingungsmode und bei Drehung um eine zur Konstruktionsebene senkrecht stehende sensitive Achse durch Coriolisbeschleunigungen angeregt werden kann (Detektionsmode).
- unter idealisierten Voraussetzungen (d.h. z.B. unendlich große Steifigkeit von Masseelementen, ideale Federstrukturen (z.B. Biegebalken mit unendlicher Steifigkeit in Längsrichtung) und verschwindend geringe Fertigungstoleranzen) besitzt die gekoppelte Struktur keinen Schwingungsmode, der durch lineare Beschleunigungen in eine Richtung parallel zur zweiten Achse angeregt werden kann.

Unter realen Bedingungen ist sicherzustellen, dass die Resonanzfrequenz dieses linearen Modes deutlich größer als die des Detektionsmodes ist, beispielsweise um ca. den Faktor 1,4.

Ein solcher Detektionsmode wird erfindungsgemäß durch ein Dreh-Federelement erzielt, welches die beiden Einzelstrukturen miteinander koppelt.

Eine einfache Realisierung eines Dreh-Federelementes ergibt sich dadurch, dass das Dreh-Federelement aus Biegebalken und einer Verankerung am Substrat symmetrisch um eine Symmetrieachse ausgebildet ist, wobei das Dreh-Federelement so ausgelegt ist, dass es bei Torsion um die Symmetrieachse weich, für alle anderen Belastungen steif ausgebildet ist.

Eine besonders einfache Realisierung ergibt sich, wenn die Einzelstrukturen Schwingungskörper umfassen, die über das Dreh-Federelement gekoppelt sind. Diese. Ausgestaltung ist bei Verwendung von Kraftgebern und/oder Abgriffen für den Anregungsmode interessant, deren Kräfte bzw. Signale nicht von der Detektionsbewegung abhängen und / oder bei Verwendung von Abgriffen und/oder Kraftgebern für den Detektionsmode, die nicht von der Anregungsbewegung abhängen.

Detektionsmode umfaßt eine aus einer gemeinsamen Drehschwingung von Teilen der Einzelstrukturen um eine zur sensitiven Achse parallele Symmetrieachse überführte geegnphasige lineare Schwingung von Teilen der Einzelstrukturen

Dabei sind in vorteilhafter Weise x-Dreh-Federelemente vorgesehen. Die x-Dreh-Federelemente haben die Eigenschaft eines Gelenks, welches gleichzeitig eine relative Drehung und Abstandsänderung in x-Richtung zwischen seinen beiden Angriffspunkten erlaubt. Durch dieses x-Dreh-Federelement können Drehbewegungen in lineare Bewegungen überführt werden.

Bëispielsweise umfassen die Einzelstrukturen Anregungseinheiten und Probemassen, wobei die Anregungseinheiten in einer ersten Richtung geführt ausgebildet sind, die Probemassen über Federelemente mit den Anregungseinheiten derart gekoppelt sind, dass diese relativ zu den Anregungseinheiten nur in einer Richtung parallel zum Substrat und senkrecht zur ersten Richtung beweglich sind, und wobei die Probemassen über das Dreh-Federelement gekoppelt sind. Dieser Drehratensensor ist vor allem bei Verwendung von Abgriffen und/oder Kraftgebern für den Detektionsmode interessant, die nicht von der Anregungsbewegung abhängen.

Bei einer bevorzugten Ausgestaltung des Drehratensensors umfassen die Einzelstrukturen Anregungseinheiten. Coriolis-Elemente und Erfassungseinheiten, wobei die Anregungseinheiten über Federelemente und die Erfassungseinheiten über das Dreh-Federelement gekoppelt sind. Durch den Einsatz von y-Federelementen zur Verankerung der Erfassungseinheiten am Substrat wird vermieden, dass die Erfassungseinheiten zusammen eine Drehschwingung durchführen und damit bei Verwendung von Plattenkondensatoranordnungen als Abgriffe für den Detektionsmode die Änderung des Plattenabstands der Plattenkondensatoranordnungen ortsabhängig ist. Außerdem werden keine Fehlsignale detektiert, wenn durch Fertigungstoleranzen Fehlwinkel zwischen der Anregungsbewegung und den Abgriffen für den Detektionsmode bestehen.

Plattenkondensatoranordnungen mit Änderung des plattenabstands als Abgriff für den Detektionsmode gemäß einer weitenen Ausführungsborin haben die Eigenschaft, dass die anliegende elektrische Spannung die Resonanzfrequenz des Detektionsmodes ändert. Dies kann gezielt genutzt werden, um die Frequenz (auf Doppelresonanz) einzustellen.

Kammantriebe als Abgriff für den Detektionsmode gemäß anderen Ausführungsbomen vermeiden die bei Plattenkondensatoranordnungen auftretenden Modulationen der Resonanzfrequenz durch Modulationssignale für die Abgrifffunktion oder durch (drehratenabhängige) Rückstellspannungen.

Die benutzten Begriffe "Kammantriebe" und "Plattenkondensatoranordnungen" sind in dieser Anmeldung folgendermaßen zu verstehen:

° Ein "Kammantrieb" ist eine Anordnung aus plattenförmigen Kondensatoren mit "eintauchenden" Elektroden, das heißt, dass sich der Überlapp der Elektroden ändert. Meistens werden gleiche Elektrodenabstände auf beiden Seiten einer eintauchenden Elektrode gewählt.

° Eine "Plattenkondensatoranordnung" ist eine Anordnung aus plattenförmigen Kondensatoren, bei welcher der Elektrodenabstand bei einer Bewegung verändert wird. Mögliche Realisierungen dafür sind zum einen ein unterschiedlicher Elektrodenabstand auf beiden Seiten einer beweglichen Elektrode (wenn nur die Frequenz verstimmt werden soll, kann auch ein gleicher Elektrodenabstand gewählt werden) und zum anderen feststehende Elektroden auf beiden Seiten einer beweglichen Elektrode auf jeweils unterschiedlichem Potential.

Beim Einsatz von Kammantrieben als Abgriff kann der Frequenzabgleich über separate Tuning-Elektroden in einfacher Weise erfolgen.

Zum Betrieb des Corioliskreisel wird durch einen Kraftgeber der Anregungsmode angeregt. Wenn der Corioliskreisel um die sensitive Achse gedreht wird, wirken Coriolis-Kräfte, die den Detektionsmode anregen können. Als Messgröße kann die Amplitude der resultierenden Schwingung verwendet werden. Dazu sind geeignete Abgriffe vorgesehen. Alternativ kann die Coriolis-Kraft rückgestellt werden. Dafür sind Kraftgeber erforderlich, durch die Momente bzw. Kräfte auf den Detektionsmode eingeprägt werden können. Die Amplitude des Rückstellmoments bzw. der Rückstellkraft ist dann ein Maß für die Winkelgeschwindigkeit. Es sind keine Kraftgeber und Abgriffe erforderlich, mit welchen Kräfte in z-Richtung eingeprägt beziehungsweise Bewegungen in z-Richtung gemessen werden können.

Ausführungsbeispiele der erfindungsgemäßen Drehsensoren werden im Folgenden anhand der Figuren beschrieben. Dabei zeigen:

**Fig.1** eine schematische Draufsicht auf einen Drehratensensor.

**Fig.2.** eine schematische Draufsicht auf ein erstes Ausführungsbeispiels eines erfindungsgemäßen Drehratensensors,

**Fig.3** eine schematische Draufsicht auf ein zweites Ausführungsbeispiels eines erfindungsgemäßen Drehratensensors,

**Fig.4.** eine schematische Draufsicht auf ein drittes Ausführungsbeispiels eines erfindungsgemäßen Drehratensensors,

**Fig.5** eine schematische Draufsicht auf ein viertes Ausführungsbeispiels eines erfindungsgemäßen Drehratensensors,

**Fig. 6** eine schematische Draufsicht auf ein fünftes Ausführungsbeispiels eines erfindungsgemäßen Drehratensensors,

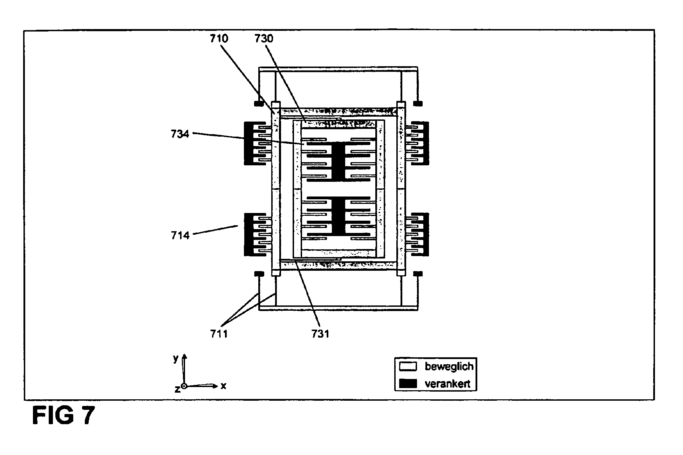

**Fig. 7** eine schematische Draufsicht auf einen Drehratensensor als Stand der Technik,

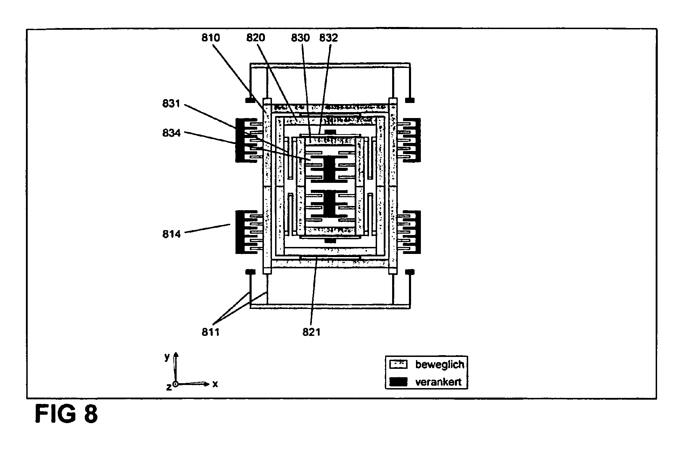

**Fig. 8** eine schematische Draufsicht auf einen weiteren Drehratensensor als Stand der Technik.

In den Figuren sind teilweise nicht alle identischen Teile mit identischen Bezugszeichen versehen, damit die Übersichtlichkeit gewahrt bleibt. Dem Fachmann wird sich allerdings aufgrund der beschriebenen Symmetrien und gleichen Darstellungen erschließen, welche Teile der Figuren zu welchen Bezugszeichen gehören.

Bei allen Ausführungsbeispielen steht die sensitive Achse senkrecht zur Zeichenebene. Die Zeichenebene wird als parallel zu einer x-Achse und einer y-Achse aufgespannt angesehen, die z-Achse steht dazu senkrecht und ist damit parallel zur sensitiven Achse. Die Substratoberfläche ist parallel zur x-Achse und zur y-Achse und bildet damit eine Konstruktionsebene x-y.

Alle hellgrau gezeichneten Komponenten stellen bewegliche "Masseelemente" dar, die in erster Näherung als unendlich steif betrachtet werden können. Dunkelgrau gezeichnete Bereiche sind relativ zum Substrat weitgehend nicht beweglich. Striche stellen Biegebalken dar, die als Komponenten von Federelementen verwendet werden. In guter Näherung sind diese Biegebalken in Längsrichtung unendlich steif. Ist die Ausdehnung eines Biegebalkens in z-Richtung deutlich größer als die Ausdehnung in der Zeichenebene senkrecht zur Längsrichtung, sind die Biegebalken in z-Richtung wesentlich steifer als in Richtung der Achse in der Zeichenebene senkrecht zur Längsrichtung. Häufig kann die Masse./ das Trägheitsmoment der Biegebalken und auch von Masseelementen, die Teil einer Federkonstruktion sind, in guter Näherung vernachlässigt werden.

Im Folgenden werden die genannten Näherungen beispielsweise mit dem Hinweis "im Wesentlichen" verwendet.

Für die Fertigung der Varianten sind eine Vielzahl von Fertigungsverfahren geeignet, insbesondere auch mikrotechnische Verfahren.

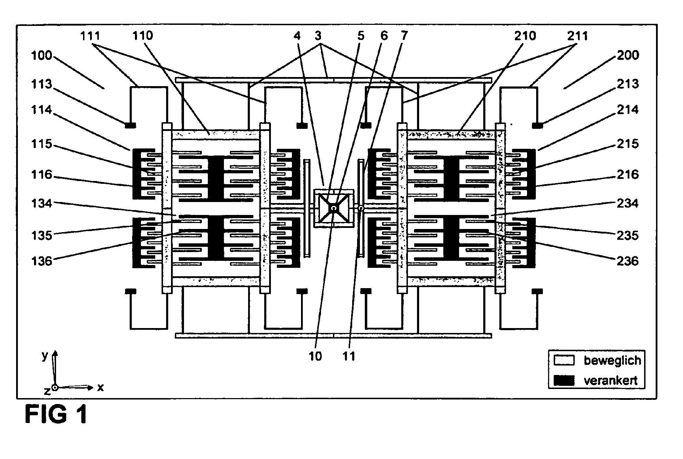

Der in Fig.1 gezeigte Drehratensensor besitzt ein Substrat (nicht dargestellt) und zwei erste Einzelstrukturen 100. 200. Die ersten Einzelstrukturen 100, 200 besitzen Schwingungskörper 110, 210, die am Substrat über erste Federelemente 111, 211 an ersten Ankerpunkten 113, 213 befestigt sind. Die ersten Federelemente 111. 211 sind weich in x- und y-Richtung und möglichst steif in z-Richtung. Die beiden Schwingungskörper 110. 210 sind über Koppel-Feder-Konstruktionen 3, ein Dreh-Federelement 4 und x-Dreh-Federelemente 7 gekoppelt.

Die Koppel-Feder-Konstruktion 3 ist so ausgelegt, dass diese in x-Richtung weich, in z-Richtung und in y-Richtung möglichst steif ausgebildet ist. Das Dreh-Federelement 4, umfassend Biegebalken 5 und Verankerung 6 am Substrat, ist so ausgelegt, dass es bei Torsion um seine Symmetrieachse 10 in z-Richtung weich, für alle anderen Belastungen steif ausgebildet ist. Das x-Dreh-Federelement 7 ist so ausgelegt, dass es in x-Richtung und bei Torsion um seine Symmetrieachse 11 in z-Richtung weich, für alle anderen Belastungen steif ausgebildet ist. Bei dieser Variante wird eine Torsion des x-Dreh-Federelements 7 jedoch durch die Anordnung (insbesondere die Koppel-Feder-Konstruktion 3) unterbunden. Deshalb kann statt des x-Dreh-Federelements 7 auch ein x-Federelement verwendet werden, das in x-Richtung weich und für alle anderen Belastungen steif ausgebildet ist. Dadurch wird die Führung des Anregungsmodes verbessert.

Der Anregungsmode entspricht einer linearen, gegenphasigen Schwingung der Schwingungskörper 110, 210 in Richtung der x-Achse. Die Resonanzfrequenz des Anregungsmodes ergibt sich im Wesentlichen aus der Masse der Schwingungskörper 110, 210 und den Federsteifigkeiten bzw. Drehfedersteifigkeiten der Federelemente 111, 211, der Koppel-Feder-Konstruktionen 3 und der x-Dreh-Federelemente 7.

Der Detektionsmode entspricht einer (gemeinsamen) Drehschwingung der Schwingungskörper 110. 210 um ihre Symmetrieachse 10 in z-Richtung. Die Resonanzfrequenz des Detektionsmodes ergibt sich im Wesentlichen aus den Trägheitsmomenten der Schwingungskörper 110, 210 und den Federsteifigkeiten bzw. Drehfedersteifigkeiten der ersten Federelemente 111, 211 und des Dreh-Federelementes 4.

Die ersten Einzelstrukturen 100, 200 besitzen erste Kraftgeber 114, 214, mit welchen der Anregungsmode angeregt wird. Entweder werden diese Kraftgeber auch als Abgriff für den Anregungsmode ausgelegt oder es sind zusätzlich Abgriffe vorzusehen. Im dargestellten Beispiel werden als Kraftgeber so genannte Kammantriebe gezeigt. Sie bestehen aus ersten bewegten Anregungs-Elektroden 115, 215, die in den Schwingungskörpern 110, 210 integriert sind, und aus ersten am Substrat verankerten Anregungs-Elektroden 116, 216. Kammantriebe können gleichzeitig als Kraftgeber und als Abgriff verwendet werden.

Die ersten Einzelstrukturen 100, 200 besitzen erste Abgriffe 134, 234, mit welchen der Detektionsmode erfasst wird. Entweder werden für den rückgestellten Betrieb diese Abgriffe auch als Kraftgeber für die Kompensation der Coriolis-Kraft ausgelegt oder es sind zusätzlich Kraftgeber vorzusehen. Im dargestellten Beispiel werden als Abgriffe Plattenkondensatoranordnungen gezeigt, wobei sich bei der Detektionsbewegung der Plattenabstand ändert. Die Abgriffe bestehen aus ersten bewegten Detektions-Elektroden 135, 235, die in den Schwingungskörpern 110, 210 integriert sind, und aus ersten arm Substrat verankerten Detektions-Elektroden 136, 236. Plattenkondensatoranordnungen können gleichzeitig als Kraftgeber und als Abgriff verwendet werden.

Im Beispiel Fig.1 ist der lineare Anregungsmode nur in der Substratebene geführt. Das führt u.a. dazu, dass bei dem gezeigten Beispiel mit ersten Kraftgebern 114, 214 mit ersten feststehenden Anregungs-Elektroden 116, 216 Störkräfte den Detektionsmode beeinträchtigen können . Zum Beispiel kann eine Fehlausrichtung zwischen den ersten Kraftgebern 114, 214 und dem Anregungsmode zu einer Störanregung des Detektionsmodes führen.

Außerdem werden bei dem gezeigten Beispiel mit ersten Abgriffen 134, 234 mit ersten feststehenden Detektions-Elektroden 136. 236 Fehlsignale detektiert, wenn durch Fertigungstoleranzen Fehlwinkel zwischen der Anregungsbewegung und den Abgriffen bestehen.

Daher ist das Beispiel der Fig.1 vor allem bei Verwendung von Kraftgebern und/oder Abgriffen für den Anregungsmode interessant, deren Kräfte bzw. Signale nicht wesentlich von der Detektionsbewegung abhängen und / oder bei Verwendung von Abgriffen und/oder Kraftgebern für den Detektionsmode, deren Signale bzw. Kräfte nicht wesentlich von der Anregungsbewegung abhängen.

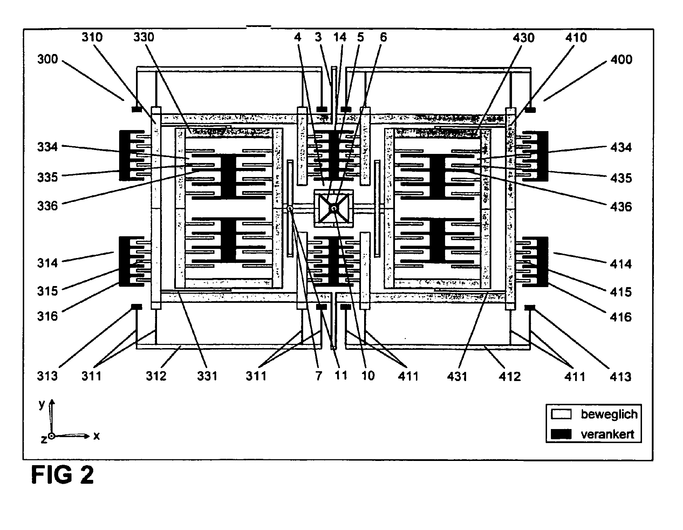

Das in Fig.2 gezeigte erste Ausführungsbeispiel besitzt ein Substrat (nicht dargestellt) und zwei zweite Einzelstrukturen 300, 400. Die zweiten Einzelstrukturen besitzen erste Anregungseinheiten 310, 410, die am Substrat über zweite Federelemente 311, 411 an zweiten Ankerpunkten 313, 413 befestigt sind. Über y-Federelemente 331, 431 sind Probemassen 330, 430 mit den ersten Anregungseinheiten 310, 410 verbunden. Die ersten Anregungseinheiten 310, 410 sind direkt mit den Koppel-Feder-Konstruktionen 3 gekoppelt. Die Probemassen 330, 430 sind direkt mit dem Dreh-Federelement 4 und den x-Dreh-Federelementen 7 gekoppelt.

Die zweiten Federelemente 311, 411 sind weich in x-Richtung und möglichst steif in y- und z-Richtung. Sie sind mit massiven Elementen 312, 412 verbunden, um die Führungseigenschaften zu verbessern. Die y-Federelemente 331, 431 sind weich in y-Richtung und möglichst steif in x- und z-Richtung. Die Koppel-Feder-Konstruktionen 3 sind so ausgelegt, dass sie in x-Richtung weich, in z-Richtung steif und in y-Richtung möglichst steif ausgebildet sind. Das Dreh-Federelement 4, umfassend Biegebalken 5 und Verankerung 6 am Substrat, ist so ausgelegt, dass es bei Torsion um seine Symmetrieachse 10 in z-Richtung weich, für alle anderen Belastungen steif ausgebildet ist. Das x-Dieb-Federelement 7 ist so ausgelegt, dass es in x-Richtung und bei Torsion um seine Symmetrieachse 11 in z-Richtung weich, für alle anderen Belastungen steif ausgebildet ist.

Der Anregungsmode entspricht einer linearen, gegenphasigen Schwingung der ersten Anregungseinheiten 310, 410 zusammen mit den Probemassen 330, 430 in Richtung der x-Achse. Die Resonanzfrequenz des Anregungsmodes ergibt sich im Wesentlichen aus der Masse der ersten Anregungseinheiten 310, 410 und der Probemassen 330, 430 sowie aus den Federsteifigkeiten bzw. Drehfedersteifigkeiten der zweiten Federelemente 311, 411, der Koppel-Feder-Konstruktionen 3 und der x-Dreh-Federelemente 7.

Der Detektionsmode entspricht einer (gemeinsamen) "Art Drehschwingung", das heißt einer Kombination aus Drehschwingung und gegenphasiger linearer Schwingung, der Probemassen 330, 430 um ihre Symmetrieachse 10 in z-Richtung, wobei die Probemassen 330, 430 durch die γ-Federelemente 331, 431 in γ-Richtung geführt werden und nicht verkippen. Die Resonanzfrequenz des Detektionsmodes ergibt sich im Wesentlichen aus den Massen bzw. Trägheitsmomenten der Probemassen 330, 430 und den Federsteifigkeiten bzw. Drehfedersteifigkeiten der γ-Federelemente 331, 431, des Dreh-Federelementes 4 und der x-Dreh-Federelemente 7.

Die zweiten Einzelstrukturen 300, 400 besitzen zweite Kraftgeber 314, 414, mit welchen der Anregungsmode angeregt wird. Entweder werden diese zweiten Kraftgeber 314, 414 auch als Abgriff für den Anregungsmode ausgelegt oder es sind zusätzlich Abgriffe vorzusehen. Im dargestellten Beispiel werden als zweite Kraftgeber 314, 414 so genannte Kammantriebe gezeigt. Sie bestehen aus zweiten bewegten Anregungs-Elektroden 315, 415, die in den ersten Anregungseinheiten 310, 410 integriert sind, und aus zweiten am Substrat verankerten Anregungs-Elektroden 316, 416. Im gezeigten Beispiel sind die mittig angeordneten verankerten Anregungs-Elektroden für die zweiten Kraftgeber der beiden zweiten Einzelstrukturen 300, 400 zu jeweils einem Kraftgeber 14 zusammengefasst, was nicht erforderlich ist, aber die Anzahl der erforderlichen Anschlüsse reduziert. Die außen liegenden zweiten verankerten Anregungs-Elektroden können ebenfalls zusammengefasst werden, z.B. durch entsprechende Leiterbahnen. Kammantriebe können gleichzeitig als Kraftgeber und als Abgriff verwendet werden.

Die zweiten Einzelstrukturen 300, 400 besitzen zweite Abgriffe 334, 434, mit welchen der Detektionsmode erfasst wird. Entweder werden für den rückgestellten Betrieb diese Abgriffe auch als Kraftgeber für die Kompensation der Coriolis-Kraft ausgelegt oder es sind zusätzlich Kraftgeber vorzusehen. Im dargestellten Beispiel werden als zweite Abgriffe Plattenkondensatoranordnungen gezeigt, wobei sich bei der Detektionsbewegung der Plattenabstand ändert. Die zweiten Abgriffe bestehen aus zweiten bewegten Detektions-Elektroden 335, 435, die in den Probemassen 330, 430 integriert sind, und aus zweiten am Substrat verankerten Detektions-Elektroden 336. 436. Plattenkondensatoranordnungen können gleichzeitig als Kraftgeber und als Abgriff verwendet werden.

Im ersten Ausführungsbeispiel führen die Probemassen auch die Anregungsbewegung durch. Das führt dazu, dass bei dem gezeigten Beispiel mit zweiten Abgriffen 334, 434 mit zweiten feststehenden Detektions-Elektroden 336, 436 Fehlsignale detektiert werden, wenn durch Fertigungstoleranzen Fehlwinkel zwischen der Anregungsbewegung und den zweiten Abgriffen 334, 434 bestehen. Das erste Ausführungsbeispiel ist deshalb v.a. bei Verwendung von Abgriffen interessant, deren Signale nicht von der Anregungsbewegung abhängen.

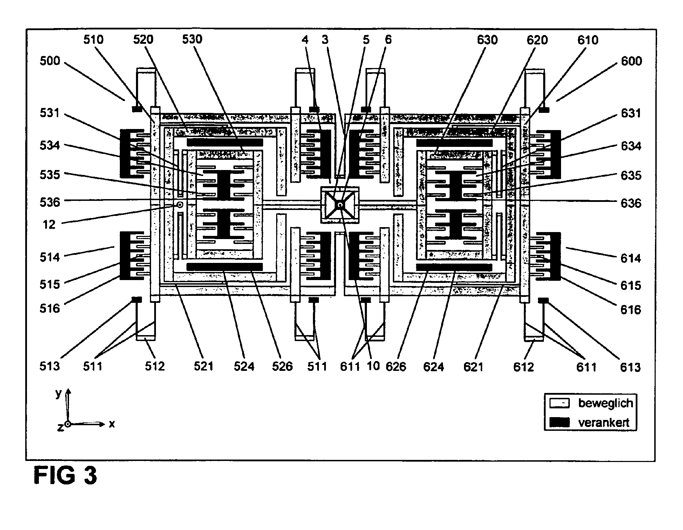

Das in Fig.3 gezeigte zweite Ausführungsbeispiel besitzt ein Substrat (nicht dargestellt) und zwei dritte Einzelstrukturen 500. 600. Die dritten Einzelstrukturen besitzen zweite Anregungseinheiten 510, 610, die am Substrat über dritte Federelemente 511, 611 an dritten Ankerpunkten 513, 613 befestigt sind. Über γ-Federelemente 521, 621 sind Coriolis-Elemente 520, 620 mit den zweiten Anregungseinheiten 510, 610 verbunden. Über weitere x-Dreh- Federelemente 531, 631 sind Erfassungseinheiten 530, 630 mit den Coriolis-Elementen 520. 620 verbunden. Die zweiten Anregungseinheiten 510, 610 sind direkt mit den Koppel-Feder-Konstruktionen 3 gekoppelt. Die Erfassungseinheiten 530. 630 sind direkt mit dem Dreh-Federelement 4 gekoppelt.

Die dritten Federelemente 511, 61 sind weich in x-Richtung und möglichst steif in γ- und z-Richtung. Sie sind mit massiven Elementen 512, 612 verbunden, um die Führungseigenschaften zu verbessern. Die γ-Federelemente 521, 621 sind weich in γ-Richtung und möglichst steif in x- und z-Richtung. Die weiteren x-Dreh-Federelemente 531, 631 sind so ausgelegt, dass sie in x-Richtung und bei Torsion um ihre Symmetrieachse 12 (von zwei in der Abbildung übereinander angeordneten Einzel-Federelementen) in z-Richtung weich, für alle anderen Belastungen steif ausgebildet sind. Im Idealfall haben die weiteren x-Dreh-Federelemente 531, 631 die Eigenschaft eines Gelenks, welches gleichzeitig eine relative Drehung und Abstandsänderung in x-Richtung zwischen Coriolis-Element und Erfassungseinheit erlaubt.

Die Koppel-Feder-Konstruktionen 3 sind so ausgelegt, dass sie in x-Richtung weich, in z- und γ-Richtung steif ausgebildet sind. Das Dreh-Federelement 4, umfassend Biegebalken 5 und Verankerung 6 am Substrat, ist so ausgelegt, dass es bei Torsion um seine Symmetrieachse 10 in z-Richtung weich, für alle anderen Belastungen steif ausgebildet ist.

Der Anregungsmode entspricht einer linearen, gegenphasigen Schwingung der zweiten Anregungseinheiten 510, 610 zusammen mit den Coriolis-Elementen 520, 620 in Richtung der x-Achse. Die Resonanzfrequenz des Anregungsmodes ergibt sich im Wesentlichen aus der Masse der zweiten Anregungseinheiten 510, 610 und der Coriolis-Elemente 520, 620 sowie aus den Federsteifigkeiten bzw. Drehfedersteifigkeiten der dritten Federelemente 511, 611, der weiteren x-Dreh-Federelemente 531, 631 und der Koppel-Feder-Konstruktionen 3.

Der Detektionsmode entspricht einer (gemeinsamen) Drehschwingung der Erfassungseinheiten 530, 630 um ihre Symmetrieachse 10 in z-Richtung. Die Coriolis-Elemente 520, 620 führen dabei eine "Art Drehschwingung" aus. Sie sind durch die γ-Federelemente 521, 621 relativ zu den dritten Anregungseinheiten 510, 610 in γ-Richtung geführt und durch die weiteren x-Dreh-Federelerriente 531, 631 gegenüber der entsprechenden Erfassungseinheit 530, 630 drehbar. Die Resonanzfrequenz des Detektionsmodes ergibt sich im Wesentlichen aus den Massen / Trägheitsmomenten der Coriolis-Elemente 520, 620 und der Erfassungseinheiten 530, 630 sowie den Federsteifigkeiten bzw. Drehfedersteifigkeiten v.a. des Dreh-Federelementes 4, der weiteren x-Dreh-Federelemente 531, 631 und der γ-Federelemente 521, 621.

Die dritten Einzelstrukturen 500, 600 besitzen dritte Kraftgeber 514, 614, mit welchen der Anregungsmode angeregt wird. Entweder werden diese Kraftgeber auch als Abgriff für den Anregungsmode ausgelegt oder es sind zusätzlich Abgriffe vorzusehen. Im dargestellten Beispiel werden als dritte Kraftgeber 514, 614 so genannte Kammantriebe gezeigt. Sie bestehen aus dritten bewegten Anregungs-Elektroden 515, 615, die in den zweiten Anregungseinheiten 510, 610 integriert sind, und aus dritten am Substrat verankerten Detektions-Elektroden 516, 616. Kammantriebe können gleichzeitig als Kraftgeber und als Abgriff verwendet werden.

Die dritten Einzelstrukturen 500, 600 besitzen dritte Abgriffe 534, 634, mit welchen der Detektionsmode erfasst wird. Entweder werden für den rückgestellten Betrieb diese Abgriffe auch als Kraftgeber für die Kompensation der Coriolis-Kraft ausgelegt oder es sind zusätzlich Kraftgeber vorzusehen. Im dargestellten Beispiel werden als dritte Abgriffe 534, 634 Plattenkondensatoranordnungen gezeigt, wobei sich bei der Detektionsbewegung der Plattenabstand ändert. Die dritten Abgriffe 534, 634 bestehen aus bewegten dritten Detektions-Elektroden 535, 635, die in den Erfassungseinheiten 530, 630 integriert sind und aus dritten am Substrat verankerten Detektions-Elektroden 536, 636. Plattenkondensatoranordnungen können gleichzeitig als Kraftgeber und als Abgriff verwendet werden.

Hervorzuheben ist, dass als Abgriff (und als Kraftgeber) für den Detektionsmode auch Kammantriebe verwendet werden können, da die Erfassungseinheiten die Anregungsbewegung nicht durchführen. Plattenkondensatoranordnungen mit Änderung des Plattenabstands als Abgriff für den Detektionsmode haben die Eigenschaft, dass die anliegende elektrische Spannung die Resonanzfrequenz des Detektionsmodes ändert. Dies kann einerseits gezielt genutzt werden, um die Frequenz (auf Doppelresonanz) einzustellen. Andererseits wird beispielsweise durch Modulationssignale für die Abgrifffunktion oder durch (drehratenabhängige) Rückstellspannungen die Resonanzfrequenz moduliert. Dieser Nachteil entfällt bei Kammantrieben. Bei Verwendung von Kammantrieben können zusätzlich Plattenkondensatoranordnungen mit Änderung des Plattenabstands integriert werden, um den oben beschriebenen Frequenzabgleich durchführen zu können.

Ferner ist anzumerken, dass weitere Kraftgeber. Abgriffe und / der Vorrichtungen zum Frequenztuning 524, 624 auch für die Coriolis-Elemente 520, 620 vorgesehen werden können. Im gezeigten Beispiel handelt es sich um Plattenkondensatoranordnungen mit Änderung des Plattenabstands. Die Anordnungen bestehen aus bewegten Elektroden, dies in den Coriolis-Elementen 520, 620 integriert sind, und aus am Substrat verankerten Tuning-Elektroden 526, 626 (es ist jeweils nur eine Elektrode dargestellt).

Im zweiten Ausführungsbeispiel führen die Erfassungseinheiten 530. 630 zusammen eine Drehschwingung durch. Das führt dazu, dass bei dem gezeigten Beispiel mit dritten Abgriffen 534, 634 mit feststehenden dritten Elektroden 536, 636 die Änderung des Plattenabstands der Plattenkondensatoranordnungen ortsabhängig ist, was bei der Auslegung und der Linearisierung einen Mehraufwand bedeutet. Eine weitere Lösung besteht darin als Abgriffe / Kraftgeber z.B. die oben genannten Kammantriebe zu verwenden und den Frequenzabgleich über die Vorrichtungen 524, 624 durchzuführen.

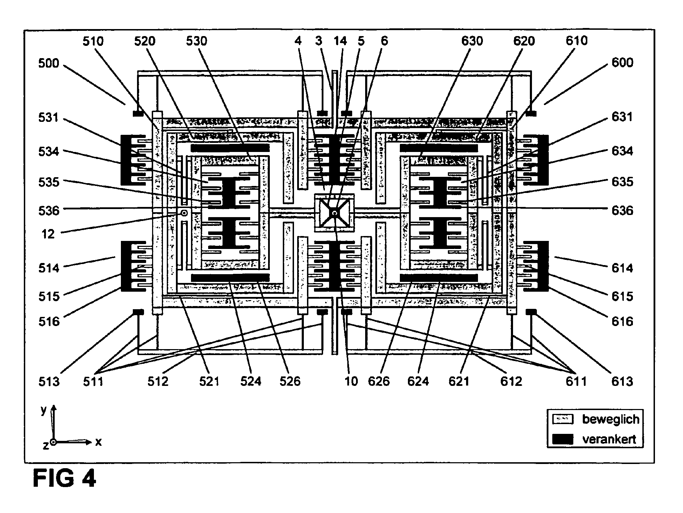

Das in Fig. 4 gezeigte dritte Ausführungsbeispiel entspricht weitgehend dem zweiten Ausführungsbeispiel mit folgenden Modifikationen:

- Die massiven Elemente 512, 612 sind durchgehend, um die Führungseigenschaften weiter zu verbessern.
- Die Koppel-Feder-Konstruktion 3 ist nach außen geklappt.
- Die mittig angeordneten verankerten Elektroden für die mittig angeordneten dritten Kraftgeber 514, 614 der beiden dritten Einzelstrukturen 500, 600 sind jeweils zu Kraftgebern 14 zusammengefasst, wodurch die Anzahl der Anschlüsse reduziert werden kann.

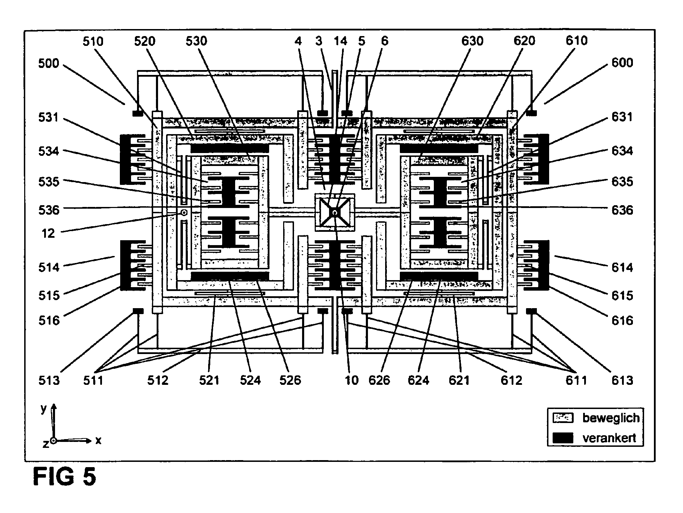

Das in Fig. 5 gezeigte vierte Ausführungsbeispiel entspricht weitgehend dem dritten Ausführungsbeispiel mit folgender Modifikation:

Die die Anregungseinheiten 510, 610 mit den Coriohs-Elementen 520, 620 verbindenden $\gamma$-Federelemente 521, 621 sind modifiziert. Dadurch wird eine zweiseitige Einspannung der Coriolis-Elemente 520, 620 im Gegensatz zur einseitigen Einspannung der Coriolis-Elemente 520, 620 im dritten Ausführüngsbeispiel (Fig. 4) erzielt. Eine einseitige Einspannung erlaubt eine Quadraturkompensation, das heißt ein Auswuchten durch Änderung der Einkopplung der Anregungsbeschleunigung in den Detektionsmode. Allerdings wird die Frequenz des Detektionsmode durch die Anregungsbeschleunigung moduliert. Bei einer zweiseitigen Einspannung ist die Quadraturkompensation stark reduziert, allerdings sind die Quadraturterme kleiner und die Frequenz des Detektionsmode wird durch die Anregungsbeschleunigung weniger moduliert. Die x-Dreh-Federelemente 531. 631 ermöglichen in reduzierte Maße weiterhin eine Quadraturkompensation und modulieren weiterhin die Frequenz der Detektionsmode. Bei idealen x-Dreh-Federelementen mit verschwindend geringer x-Steifigkeit verschwindet dieser Effekt.

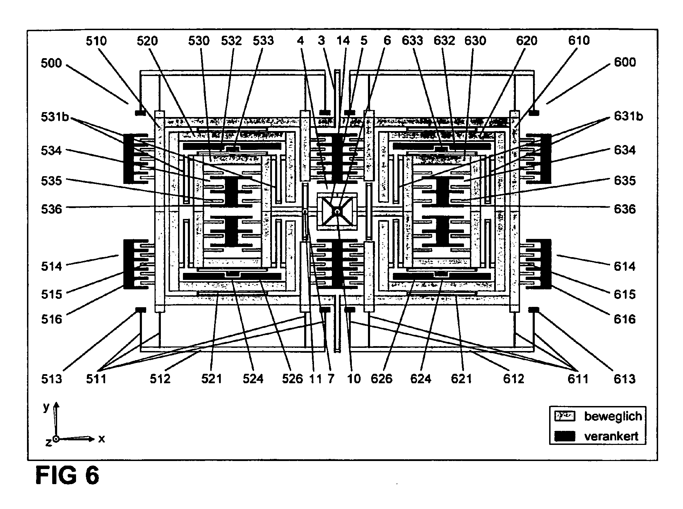

Das in Fig. 6 dargestellte fünfte Ausführungsbeispiel besitzt im Vergleich zum vierten Ausführungsbeispiel folgende Modifikationen:

Die Erfassungseinheiten 530, 630 sind zusätzlich am Substrat über weitere $\gamma$-Federelemente 532, 632 an Ankerpunkten 533, 633 befestigt. Zwischen dem Dreh-Federelement 4 und den Erfassungseinheiten 530, 630 sind x-Dreh-Federelemente 7 angeordnet. Die x-Federelemente 531b, 631b, welche die Erfassungseinheiten 530, 630 mit den Cotiolis-Elementen 520. 620 verbinden, können zweiseitig ausgeführt werden, da sie keine "Gelenkeigenschaft" mehr aufweisen müssen. Die x-Federelemente 531b, 631b sind so ausgelegt, dass sie in x-Richung weich, für alle anderen Belastungen steif ausgebildet sind. Die weiteren $\gamma$-Federelemente 532, 632 sind so ausgelegt, dass sie zusammen in $\gamma$-Richtung weich, für alle anderen Belastungen steif ausgebildet sind.

Das.x-Dreh-Federelement 7 ist so ausgelegt, dass es in x-Richtung und bei Torsion um seine Symmetrieachse 11 in z-Richtung weich. für alle anderen Belastungen steif ausgebildet ist.

Die Resonanzfrequenz des Anregungsmodes ergibt sich im Wesentlichen aus der Masse der zweiten Anregungseinheiten 510. 610 und der Coriolis-Elemente 520, 620 sowie aus den Federsteifigkeiten bzw. Drehfedersteifigkeiten der dritten Federelemente 511, 611, der x- Federelemente 531b, 631b, der Koppel-Feder-Konstruktionen 3, und der x-Dreh-Federelemente 7.

Der Detcktionsmode entspricht einer [gemeinsamen] Art Drehschwingung der Erfassungseinheiten 530, 630 und der Coriolis-Elemente 520, 620 um ihre Symmetrieachse 10 in z-Richtung. Wie beim zweiten, dritten und vierten Ausführungsbeispiel bewegen sich die Coriolis-Elemente 520, 620 dabei näherungsweise in einer linearen, gegenphasigen Schwingung in $\gamma$-Richtung. Beim fünften Ausführungsbeispiel werden auch die Erfassungseinheiten 530, 630 - durch die weiteren γ-Federelemente 532, 632 - in γ-Richtung geführt. Sie sind durch die x-Dreh-Federelemente 7 relativ zum Dreh-Federelement 4 zum die Achse 11 drehbar. Ihre Bewegung entspricht damit auch näherungsweise einer linearen gegenphasigen Schwingung in γ-Richtung. Die Resonanzfrequenz des Detektionsmodes ergibt sich im Wesentlichen aus den Massen / Trägheitsmomenten der Coriolis-Elemente 520, 620 und der Erfassungseinheiten 530, 630 sowie den Federsteifigkeiten bzw. Drehfedersteifigkeiten v.a. des Dreh-Federelementes oder x-Dreh-Federelemente 7, der weiteren γ-Federelemente 532, 632 und der y-Federelemente 521, 621, welche die Coriolis-Elemente 520, 620 mit den Anregungseinheiten 510, 610 verbinden.

Beim fünften Ausführungsbeispiel wird damit - anders als beim zweiten, dritten und vierten Ausführungsbeispiel - vermieden, dass die Erfassungseinheiten 530, 630 zusammen eine Drehschwingung durchführen und bei dem gezeigten Beispiel mit dritten Abgriffen 534, 634 mit dritten feststehenden Detektions-Elektroden 536, 636 dies Änderung des Plattenabstands der Plattenkondensatoranordnungen ortabhängig ist. Des Weiteren werden durch die Entkopplung der x-Dreh-Federelemente 7 von der Bewegung der Anregungsmode durch die x-Federelemente 531b und 631b die Quadraturterme kleiner und eine Modulation der Frequenz der Detektionsmode durch die Anregungsbeschleunigung unterbunden. Dieses hat auch zur Folge, dass eine Quadraturkompensation, wie für die vorherigen Ausführungsbeispiele vorgestellt, nicht möglich ist. Durch eine einseitige Einspannung der Coriolis-Elemente 520, 620 mit den in Fig. 4 dargestellten einseitig einspannenden Federelementen 521, 621, können diese Effekte auch in der in Fig. 6 dargestellten Ausführung eingeschaltet und zur Quadraturkompensation genutzt werden.

## Patentansprüche

1. Drehratensensor mit
   einem Substrat und zwei relativ zum Substrat in einer Konstruktionsebene (x-y) beweglichen mehrteillgen Einzelstrukturen (300, 400, 500, 600), wobei die beiden Einzeistrukturen (300, 400, 500, 600) zu einer gekoppelten Struktur derartig gekoppelt sind, dass

   - die gekoppelte Struktur einen ersten Schwingungsmode mit gegenphasigen Auslenkungen der beweglichen Strukturen in einer ersten Richtung (x) in der Konstruktionsebene (x-y) als Anregungsmode aufweist
   - die gekoppelte Struktur einen zweiten Schwingungsmode als Detektionsmode aufweist, der bei angeregtem ersten Schwingungsmode und bei einer Drehung um eine zur Konstruktionsebene (x-y) senkrecht stehende sensitive Achse (z) des Drehratensensors durch Coriolisbeschleunigungen angeregt wird,

   dadurch gekennzeichnet, dass
   ein bei Torsion um eine zur sensitiven Achse (z) parallele Symmetrieachse (10) weiches, für alle anderen Belastungen steifes Dreh-Federelement (4) vorgesehen ist, welches die beiden Einzelstrukturen (300, 400, 500, 600) miteinander koppelt, so dass Teile der Einzelstrukturen eine gemeinsame Drehschwingung um die Symmetrieachse (10) ausführen, wobei der Detektionsmode eine aus der Drehschwingung überführte gegenphasige lineare Schwingung von Teilen der beiden Einzelstrukturen (300, 400, 500, 600) entlang einer zur ersten Richtung (x) orthogonalen zweiten Richtung (y) umfasst.

2. Drehratensensor nach Anspruch 1.
   **dadurch gekennzeichnet, dass**
   das Dreh-Federelement (4) Biegebalken (5) und eine Verankerung (6) am Substrat umfasst und symmetrisch um die Symmetrieachse (10) ausgebildet ist.

3. Drehratensensor nach Anspruch 1.
   dadurch gekenntzeichnet, dass
   die Einzelstrukturen (300, 400) Anregungseinheiten (310, 410) und Probemassen (330, 430) aufweisen, wobei die Anregungseinheiten (310, 410) nur in der ersten Richtung (x) beweglich sind und über Koppel-Feder-Konstruktionen (3) gekoppelt sind und die Probemassen (330, 430) über γ-Federelemente (331, 431) an die Anregungseinheiten (310, 410) gekoppelt sind,
   und die γ-Federelemente (331, 431) in der ersten Richtung (x) und parallel zur sensitiven Achse (z) steif und in der zweiten Richtung (y) weich ausgebildet sind und
   die Probemassen (330, 430) über x-Dreh-Federelemente (7) mit dem Dreh-Federelement (4) verbunden sind, wobei die x-Dreh-Federelemente (7) eine zur sensitiven Achse (z) parallele Symmetrieachse (11) aufweisen, jeweils zwischen den Einzelstrukturen (300, 400) und dem Drehfederelement (4) vorgesehen sind und in x-Richtung und bei Torsion um ihre Symmetrieachse (11) weich und für alle anderen Belastungen steif ausgebildet sind.

**4.** Drehratensensor nach Anspruch 2,
Dadurch gekenntzeichnet, dass
die Einzelstrukturen (500, 600) Anregungseinheiten (510, 610), Coriolis-Elemente (520, 620) und Erfassungseinheiten (530, 630) umfassen, wobei die Anregungseinheiten (510, 610) über Koppel-Feder-Konstruktionen (3) und die Erfassungseinheiten (530, 630) über das Dreh-Federelement (4) und die x-Dreh-Federelemente (7) gekoppelt sind und wobei die Coriolis-Elemente (520, 620) über y-Federelemente (521, 621) mit den Anregungseinheiten (510, 610) und die Erfassungseinheiten (530, 630) über x-Federelemente (531b, 631b) mit den Coriolis-Elementen (520, 620) verbunden sind und
dass die Einzelstrukturen (500, 600) weitere y-Federelemente (532, 632) aufweisen, mit denen die Erfassungseinheiten (530, 630) am Substrat verankert sind, wobei die weiteren y-Federelemente (532, 632) so ausgelegt sind, dass diese in Richtung der zweiten Achse (y) weich, für alle anderen Belastungen steif ausgebildet sind, wobei die x-Dreh-Federelemente (7) eine zur sensitiven Achse (z) parallele Symmetrieachse (11) aufweisen, jeweils zwischen den Einzelstrukturen (500, 600) und dem Drehfederelement (4) vorgesehen sind und in x-Richtung und bei Torsion um ihre Symmetrieachse (11) weich und für alle anderen Belastungen steif ausgebildet sind.

**5.** Drehratensensor nach einem der Ansprüche 1 bis 2,
dadurch gekenntzeichnet, des
der Detektionsmode eine Mischform aus der gegenphasigen linearen Schwingung von Teilen der beiden Einzelstrukturen (300, 400, 500, 600), entlang der zweiten Richtung (y) und
der Drehschwingung anderer Teile der beiden Einzelstrukturen (300, 400, 500, 600) um die sensitive Achse (z) ist.

**6.** Drehratensensor nach Anspruch 5,
**dadurch gekennzeichnet, dass**
die Einzelstrukturen (500, 600) Anregungseinheiten (510, 610), Coriolis-Elemente (520, 620) und Erfassungseinheiten (530, 630) umfassen, wobei die Coriolis-Elemente (520, 620) über y-Fedeielemente (521, 621) mit den Anregungseinheiten (510, 610) verbunden sind und die Anregungseinheiten (510, 610) über Koppel-Federkonstruktionen (3) und die Erfassungseinheiten (530, 630) über das Dreh-Federelement (4) gekoppelt sind und
dass x-Dreh-Federelemente (531, 631), die eine zur Achse (z) parallele Symmetrieachse (11) aufweisen, jeweils zwischen den Coriolis-Elementen (520, 620) und den Erfassungseinheiten (530, 630) vorgesehen sind, wobei die x-Dreh-Federelemente (531,631) in x-Richtung und bei Torsion um ihre Symmetrieachse - (11) weich und für alle anderen Belastungen steif ausgebildet sind.

**7.** Drehratensensor nach einem der Ansprüche 1 bis 6,
**dadurch gekennzeichnet, dass**
dass die Einzelstrukturen (300, 400, 500, 600) Kraftgeber (314, 414, 514, 614) zum Anregen der Anregungsmode aufweisen.

**8.** Drehratensensor nach einem der Ansprüche 1 bis 7,
**dadurch gekennzeichnet, dass**
dass die Einzelstrukturen (300, 400, 500, 600) Abgriffe für den Anregungsmode aufweisen.

**9.** Drehratensensor nach einem der Ansprüche 1 bis 8.
dadurch gekenntzeichnet, dass
die Einzelstrukturen (300, 400, 500, 600) Abgriffe (334, 434, 534, 634) zum Erfassen des Detektionsmodes aufweisen.

**10.** Drehratensensor nach Anspruch 9,
**dadurch gekennzeichnet, dass**
die Abgriffe (334, 434, 534, 634) zum Erfassen des Detektionsmodes als Plattenkondensatoranordnungen ausgebildet sind.

**11.** Drehratensensor nach Anspruch 9,
**dadurch gekennzeichnet, dass**
die Abgriffe (534, 634) zum Erfassen des Detektionsmodes als Kammantriebe ausgebildet sind.

**12.** Drehratensensor nach einem der Ansprüche 1 bis 11.
**dadurch gekennzeichnet, dass**
die Einzelstrukturen (300, 400, 500, 600) Kraftgeber zum Rückstellen des Detektionsmodes aufweisen.

**13.** Drehratensensor nach einem der Ansprüche 1 bis 12.
**dadurch gekennzeichnet, dass**
Tuning-Elektroden (524, 624) vorgesehen sind, um die Resonanzfrequenz der Einzelstrukturen (300, 400, 500, 600) abzustimmen.

## Claims

**1.** A rotation rate sensor having
a substrate and two multipart individual structures (300, 400, 500, 600) which can move relative to the substrate on a design plane (x-y), wherein the two individual structures (300, 400, 500, 600) are coupled to form a coupled structure such that

- the coupled structure has a first oscillation mode with antiphase deflections of the moving structures in a first direction (x) on the design plane (x-y) as an excitation mode,
- the coupled structure has a second oscillation mode as a detection mode, which is excited by Coriolis accelerations when the first oscillation mode is excited and during rotation about a sensitive axis (z), which is at right angles to the design plane (x-y), of the rotation rate sensor,

**characterized in that**
a rotating spring element (4) is provided which is soft for torsion about an axis of symmetry (10) which is parallel to the sensitive axis (z), is stiff for all other loads and couples the two individual structures (300, 400, 500, 600) to one another, such that parts of the individual structures carry out a common rotary oscillation about the axis of symmetry (10), wherein the detection mode comprises antiphase linear oscillation, transferred from the rotary oscillation, of parts of the two individual structures (300, 400, 500, 600) along a second direction (y), which is at right angles to the first direction (x).

**2.** The rotation rate sensor as claimed in claim 1,
**characterized in that**
the rotating spring element (4) comprises bending beams (5) and an anchorage (6) on the substrate, and is formed symmetrically about the axis of symmetry (10).

**3.** The rotation rate sensor as claimed in claim 1,
**characterized in that**
the individual structures (300, 400) have excitation units (310, 410) and sample masses (330, 430), wherein the excitation units (310, 410) can move only in the first direction (x) and are coupled via coupling spring structures (3), and the sample masses (330, 430) are coupled via y spring elements (331, 431) to the excitation units (310, 410), and the y spring elements (331, 431) are stiff in the first direction (x) and parallel to the sensitive axis (z), and are soft in the second direction (y), and
the sample masses (330, 430) are connected via x rotating spring elements (7) to the rotating spring element (4), wherein
the x rotating spring elements (7) have an axis of symmetry (11) which is parallel to the sensitive axis (z), are in each case provided between the individual structures (300, 400) and the rotating spring element (4), and are soft in the x direction and for torsion about their axis of symmetry (11), and stiff for all other loads.

**4.** The rotation rate sensor as claimed in claim 2, **characterized in that**
the individual structures (500, 600) comprise excitation units (510, 610), Coriolis elements (520, 620) and detection units (530, 630), wherein the excitation units (510, 610) are coupled via coupling spring structures (3) and the detection units (530, 630) are coupled via the rotating spring element (4) and the x rotating spring elements (7), and wherein the Coriolis elements (520, 620) are connected via y spring elements (521, 621) to the excitation units (510, 610), and the detection units (530, 630) are connected via x spring elements (531b, 631b) to the Coriolis elements (520, 620), and
**in that** the individual structures (500, 600) have further y spring elements (532, 632), by means of which the detection units (530, 630) are anchored on the substrate, wherein the further y spring elements (532, 632) are designed such that they are soft in the direction of the second axis (y), and are stiff for all other loads, wherein the x rotating spring elements (7) have an axis of symmetry (11) which is parallel to the sensitive axis (z), are in each case provided between the individual structures (500, 600) and the rotating spring element (4), and are soft in the x direction and for torsion about their axis of symmetry (11), and stiff for all other loads.

5. The rotation rate sensor as claimed in one of claims 1 to 2,
**characterized in that**
the detection mode is a mixed form of the antiphase linear oscillation of parts of the two individual structures (300, 400, 500, 600) along the second direction (y) and
of the rotary oscillation of other parts of the two individual structures (300, 400, 500, 600) about the sensitive axis (z).

6. The rotation rate sensor as claimed in claim 5,
**characterized in that**
the individual structures (500, 600) comprise excitation units (510, 610), Coriolis elements (520, 620) and detection units (530, 630), wherein the Coriolis elements (520, 620) are connected via y spring elements (521, 621) to the excitation units (510, 610), the excitation units (510, 610) are coupled via coupling spring structures (3), and the detection units (530, 630) are coupled via the rotating spring element (4), and
**in that** x rotating spring elements (531, 631), which have an axis of symmetry (11) which is parallel to the axis (z), are in each case provided between the Coriolis elements (520, 620) and the detection units (530, 630), wherein the x rotating spring elements (531, 631) are soft in the x direction and for torsion about their axis to symmetry (11), and are stiff for all other loads.

7. The rotation rate sensor as claimed in one of claims 1 to 6,
**characterized in that**
the individual structures (300, 400, 500, 600) have force transmitters (314, 414, 514, 614) for excitation of the excitation mode.

8. The rotation rate sensor as claimed in one of claims 1 to 7,
**characterized in that**
the individual structures (300, 400, 500, 600) have taps for the excitation mode.

9. The rotation rate sensor as claimed in one of claims 1 to 8,
**characterized in that**
the individual structures (300, 400, 500, 600) have taps (334, 434, 534, 634) for detection of the detection mode.

10. The rotation rate sensor as claimed in claim 9,
**characterized in that**
the taps (334, 434, 534, 634) for detection of the detection mode are plate capacitor arrangements.

11. The rotation rate sensor as claimed in claim 9,
**characterized in that**
the taps (534, 634) for detection of the detection mode are comb drives.

12. The rotation rate sensor as claimed in one of claims 1 to 11,
**characterized in that**
the individual structures (300, 400, 500, 600) have force transmitters for resetting the detection mode.

13. The rotation rate sensor as claimed in one of claims 1 to 12,
**characterized in that**
tuning electrodes (524, 624) are provided, in order to tune the resonant frequency of the individual structures (300, 400, 500, 600).

**Revendications**

1. Capteur de vitesse de rotation avec
un substrat et deux structures individuelles en plusieurs parties (300, 400, 500, 600) mobiles par rapport au substrat dans un plan de construction (x-y), étant précisé que les deux structures individuelles (300, 400, 500, 600) sont couplées pour former une structure couplée, de telle sorte que

- la structure couplée présente un premier mode de vibration avec des déviations en opposition de phase des structures mobiles dans un premier sens (x) dans le plan de construction (x-y), comme mode d'excitation
- la structure couplée présente un second mode de vibration, comme mode de détection, qui, quand le premier mode de vibration est excité et lors d'une rotation sur un axe sensitif, perpendiculaire au plan de construction (z), du capteur de vitesse de rotation, est excité par des accélérations de Coriolis,

**caractérisé en ce qu'**il est prévu un élément élastique en torsion (4) qui est souple lors d'une torsion sur un axe de symétrie (10) parallèle à l'axe sensitif (z) et rigide pour toutes les autres contraintes, et qui relie entre elles les deux structures individuelles (300, 400, 500, 600), de sorte que des parties des structures individuelles décrivent une vibration de torsion commune sur l'axe de symétrie (10), étant précisé que le mode de détection comprend une vibration linéaire en opposition de phase, transformée à partir de la vibration de torsion, de parties des deux structures individuelles (300, 400, 500, 600) le long d'un second sens (y) orthogonal par rapport au premier sens (x).

2. Capteur de vitesse de rotation selon la revendication 1, **caractérisé en ce que** l'élément élastique en torsion (4) comprend des branches de flexion (5) et un ancrage (6) sur le substrat, et a une forme symétrique par rapport à l'axe de symétrie (10).

3. Capteur de vitesse de rotation selon la revendication 1, **caractérisé en ce que** les structures individuelles (300, 400) comportent des unités d'excitation (310, 410) et des masses d'essai (330, 430), étant précisé que les unités d'excitation (310, 410) ne sont mobiles que dans le premier sens (x) et sont couplées par l'intermédiaire de constructions élastiques de couplage (3), et que les masses d'essai (330, 430) sont couplées aux unités d'excitation (310, 410) par l'intermédiaire d'éléments élastiques y (331, 431),

et **en ce que** les éléments élastiques y (331, 431) sont rigides dans le premier sens (x) et parallèlement à l'axe sensitif (z), et sont souples dans le second sens (y) et

**en ce que** les masses d'essai (330, 430) sont reliées à l'élément élastique en torsion (4) par l'intermédiaire d'éléments élastiques en torsion x (7), étant précisé

que les éléments élastiques en torsion (7) présentent un axe de symétrie parallèle à l'axe sensitif (z), sont prévus entre les structures individuelles (300, 400) et l'élément élastique en torsion (4) et sont souples lors d'une torsion sur leur axe de symétrie (11), et rigides pour toutes les autres contraintes.

4. Capteur de vitesse de rotation selon la revendication 2, **caractérisé en ce que** les structures individuelles (500, 600) comprennent des unités d'excitation (510, 610), des éléments de Coriolis (520, 620) et des unités de détection (530, 630), étant précisé que les unités d'excitation (510, 610) sont couplées par l'intermédiaire des constructions élastiques de couplage (3) et que les unités de détection (530, 630) sont couplées par l'intermédiaire de l'élément élastique en torsion (4) et des éléments élastiques en torsion x (7), et que les éléments de Coriolis (520, 620) sont reliés aux unités d'excitation (510, 610) par l'intermédiaire d'éléments élastiques y (512, 612) tandis que les unités de détection (530, 630) sont reliées aux éléments de Coriolis (520, 620) par l'intermédiaire d'éléments x (531b, 631b), et

**en ce que** les structures individuelles (500, 600) comportent d'autres éléments élastiques (532, 632) au niveau desquels les unités de détection (530, 630) sont ancrées au substrat, étant précisé que ces autres éléments élastiques (532, 632) sont conçus pour être souples dans le sens du second axe (y), et rigides pour toutes les autres contraintes, étant précisé

que les éléments élastiques en torsion x (7) présentent un axe de symétrie (11) parallèle à l'axe sensitif (z), sont prévus entre les structures individuelles (500, 600) et l'élément élastique en torsion (4) et sont souples dans le sens x et lors d'une torsion sur leur axe de symétrie, et rigides pour toutes les autres contraintes.

5. Capteur de vitesse de rotation selon l'une des revendications 1 à 2, **caractérisé en ce que** le mode de détection est une forme mixte de la vibration linéaire en opposition de phase de parties des deux structures individuelles (300, 400, 500, 600) le long du second sens (y), et

de la vibration de torsion d'autres parties des deux structures individuelles (300, 400, 500, 600) sur l'axe sensitif (z).

6. Capteur de vitesse de rotation selon la revendication 5, **caractérisé en ce que** les structures individuelles (500, 600) comprennent des unités d'excitation (510, 610), des éléments de Coriolis (520, 620) et des unités de détection (530, 630), étant précisé que les éléments de Coriolis (520, 620) sont reliés aux unités d'excitation (510, 610) par l'intermédiaire d'éléments élastiques y (521, 621) et que les unités d'excitation (510, 610) sont couplées par l'intermédiaire de constructions élastiques de couplage (3), et les unités de détection (530, 630) par l'intermédiaire de l'élément élastique en torsion (4), et

**en ce que** des éléments élastiques x (531, 631) qui présentent un axe de symétrie parallèle (11) à l'axe (z) sont prévus entre les éléments de Coriolis (520, 620) et les unités de détection (530, 630), étant précisé que les éléments élastiques en torsion x (531, 631) sont souples dans le sens x et lors d'une torsion sur leur axe de symétrie (11), et sont rigides pour toutes les autres contraintes.

**7.** Capteur de vitesse de rotation selon l'une des revendications 1 à 6, **caractérisé en ce que** les structures individuelles (300, 400, 500, 600) comportent des générateurs de force pour exciter les modes d'excitation.

**8.** Capteur de vitesse de rotation selon l'une des revendications 1 à 7, **caractérisé en ce que** les structures individuelles (300, 400, 500, 600) comportent des détecteurs pour le mode d'excitation.

**9.** Capteur de vitesse de rotation selon l'une des revendications 1 à 8, **caractérisé en ce que** les structures individuelles (300, 400, 500, 600) comportent des détecteurs (334, 434, 534, 634) pour détecter le mode de détection.

**10.** Capteur de vitesse de rotation selon la revendication 9, **caractérisé en ce que** les détecteurs (334, 434, 534, 634) pour conçus pour détecter le mode de détection sous la forme de dispositifs condensateurs à lames.

**11.** Capteur de vitesse de rotation selon la revendication 9, **caractérisé en ce que** les détecteurs (534, 634) sont conçus pour détecter le mode de détection sous la forme de commandes à peigne.

**12.** Capteur de vitesse de rotation selon l'une des revendications 1 à 11, **caractérisé en ce que** les structures individuelles (300, 400, 500, 600) comportent des générateurs de force pour remettre le mode de détection en position initiale.

**13.** Capteur de vitesse de rotation selon l'une des revendications 1 à 12, **caractérisé en ce qu'**il est prévu des électrodes de réglage (524, 624) pour régler la fréquence de résonance des structures individuelles (300, 400, 500, 600).

FIG 1

**FIG 2**

**FIG 3**

FIG 4

FIG 5

FIG 6

EP 2 160 566 B1

FIG 7

22

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005066585 A1
- WO 2005066584 A1
- US 6705164 B
- WO 0216871 A1
- US 6691571 B2
- DE 19641284

- WO 9534798 A
- WO 2006113162 A
- US 20050072231 A
- DE 19530007
- US 6705164 B2

**In der Beschreibung aufgeführte Nicht-Patentliteratur**

- **M.F. ZAMAN ; A. SHARMA ; F. AYAZI.** High Performance Matched-Mode Tuning Fork Gyroscope. *Proc. IEEE Micro Electromechanical Systems Workshop (MEMS 2006,* Januar 2006, 66-69
- **P. GREIFF ; B. BOXENHORN ; T. KING ; L. NILES.** Silicon Monolithic Micromechanical Gyroscope. *Tech. Digest, 6th Int. Conf. on Solid-State Sensors and Actuators (Transducers '91,* Juni 1991, 966-968

- **J. BERNSTEIN ; S. CHO ; A.T. KING ; A. KOUREPINS ; P. MACIEL ; M. WEINBERG.** A Micromachined Comb-Drive Tuning Fork Rate Gyroscope. *Proc. IEEE Micro Electromechanical Systems Workshop (MEMS 93,* Februar 1993, 143-148